# NEUE EUROPÄISCHE PATENTSCHRIFT

(11) **EP 2 970 700 B2**
(45) Veröffentlichungstag und Bekanntmachung des Hinweises auf die Entscheidung über den Einspruch: **07.07.2021**
(45) Hinweis auf die Patenterteilung: 27.12.2017
(21) Anmeldenummer: 14709546.7
(22) Anmeldetag: 05.03.2014
(51) Int. Cl.: C09D 7/00

(54) **CELLULOSE-HALTIGE LACKSYSTEME**
CELLULOSE-CONTAINING PAINT SYSTEMS
SYSTÈMES DE PEINTURES CONTENANT DE LA CELLULOSE

(30) Priorität: 15.03.2013 DE 102013004554
(43) Veröffentlichungstag der Anmeldung: 20.01.2016
(73) Patentinhaber: Clariant International Ltd, 4132 Muttenz (CH)
(72) Erfinder: NIEDERLEITNER, Tobias, 86485 Feigenhofen (DE); HERRLICH, Timo, 77815 Bühl (DE); BRÖHMER, Manuel, 82140 Olching (DE); GÖRES, Stefanie, 67551 Worms (DE)
(74) Vertreter: Jacobi, Markus Alexander
(86) Internationale Anmeldenummer: PCT/EP2014/000557
(87) Internationale Veröffentlichungsnummer: WO 2014/139644

(56) Entgegenhaltungen:
- EP-A1- 1 818 370
- EP-A1- 2 143 776
- WO-A1-02/100955
- WO-A1-2004/113460
- WO-A1-2006/119770
- WO-A1-2012/021534
- DE-A1-102007 059 733
- DE-C1- 19 725 829
- GB-A- 1 320 452
- US-A- 5 518 764
- US-A1- 2012 190 776
- A. Rawle. The basic principles in particle size analysis
- P. Glockner, Et Al.: "Radiation Curing", European Coatings Tech Files European Coatings Tech Files, pages 95-97, [retrieved on 2018-11-06]
- Ullmann's Encyclopedia of Industrial Chemistry, 2004, Seiten 326-327
- Ullmann's Encyclopedia of Industrial Chemistry, 2004, S. 328
- "Mikrokristalline Cellulose" In: "Römpps Online Lexikon", August 2010 (2010-08)
- Datenblatt ARBOCEL BE 600-30 PU
- Datenblatt ARBOCEL BWW 40
- A Guidebook to Particle Size Analysis, Horiba Instruments Inc. 2012

## Beschreibung

Die Erfindung betrifft chemisch nichtmodifizierte Cellulose enthaltende Lacksysteme sowie die Verwendung von Cellulose/Wachskombinationen in Lacken zur Verbesserung des Absetz- und Redispergierverhaltens und einer signifikanten Verbesserung der Kratzfestigkeit und Haptik.

### Einleitung:

Unter Lacken versteht man nach DIN EN 971-1 im Allgemeinen Beschichtungsstoffe mit einem bestimmten Eigenschaftsbild. Lacke haben normgemäß die Aufgabe als flüssige, pastenförmige oder auch pulverförmige Beschichtungsstoffe optisch deckende Beschichtungen mit dekorativen, schützenden und gegebenenfalls auch spezifischen technischen Eigenschaften zu erzielen. So offenbart EP 2 143 776 beispielsweise Lumineszenzlacke auf Basis von Seltenerdmetalloxide, die auch zur Beschichtung von cellulosehaltigen Materialien eingesetzt werden können. Lacke lassen sich u. a. nach der Art des Filmbildners (Alkydharzlack, Acrylatharzlack, Cellulosenitratlack, Epoxidharzlack, Polyurethanharzlack etc.) klassifizieren. Als Bindemittel werden, nach obiger Norm, die pigment- und füllstofffreien Anteile der getrockneten bzw. gehärteten Beschichtung definiert. Das Bindemittel setzt sich somit aus einem Filmbildner und dem nichtflüchtigen Anteil der Additive zusammen. Nicht getrocknete bzw. nicht gehärtete Lacksysteme sind in der Regel aus einem Filmbildner wie z. B. einem Epoxidharz, Polyesterharz, Polyurethan, Cellulosederivat, Acrylatharz etc. und ggf. weiteren Komponenten wie Lösemittel, Additive, Füllstoffe und Pigmente, zusammengesetzt. Lösemittelfreie Systeme werden üblicherweise entweder auf wässriger Basis beispielsweise als Dispersionslacke verwendet, oder sind vollständig lösemittelfrei, da der Filmbildner bereits in flüssiger Form (z. B. flüssige Monomere) vorliegt. Lacksystemen werden darüber hinaus Additive zur Einstellung der gewünschten Gebrauchseigenschaften zugegeben. So werden beispielsweise mikronisierte Wachse zugesetzt, um den Lackoberflächen eine verbesserte Kratzfestigkeit, Mattierung, Resistenz gegen Aufpolieren und Beständigkeit gegen Metallmarkierungen zu verleihen (vgl. z. B. Fette, Seifen, Anstrichmittel 87, Nr. 5, Seite 214 - 216 (1985). Ein ebenfalls wirksamer Schutz der Lackoberfläche wird durch die Zugabe von bestimmten Silikonen erzielt, welche, ähnlich wie Wachse durch Herabsetzung des Gleitreibungskoeffizienten des getrockneten Lacks das sogenannte Blocken (engl. "blocking") verringern und damit die Kratzfestigkeit verbessern (vgl. Ullmann's Encyclopedia of Industrial Chemistry, 5. Auflage, Vol. A 18, Kap. 4.3 Paints & Coatings, Weinheim, 1991, Seite 466). Kratzfestigkeit ist insbesondere bei solchen Lackierungen- und Lackanstrichen von Bedeutung, die mechanischen Beanspruchungen ausgesetzt sind, wie z. B. bei Fußböden oder Möbeln, wie z. B. Schreib-, Esstisch, etc., oder bei diversen Gebrauchsgegenständen, wie z. B. Kinderspielzeug. Jedoch spielt insbesondere bei Fußböden neben der Kratzfestigkeit auch die Trittsicherheit und somit eine Verringerung der Ausrutschgefahr, also ein erhöhter Gleitreibungskoeffizient, eine wichtige Rolle. Bei Gebrauchsgegenständen und Möbeloberflächen ist häufig eine angenehme Haptik wünschenswert. Anders als bei Gleitreibung und Kratzfestigkeit, welche durch Messungen quantifiziert werden können, ist die Haptik nur qualitativ bestimmbar. Als Maß für die Griffigkeit werden Begriffe wie z. B. "weich" ("soft touch"), samtig, glatt, rau, hart etc. verwendet. Die Oberflächeneigenschaften lassen sich, wie in DE 10 2007 059 733 beschrieben, auch durch Zugabe von polyfunktionellen Nitronen ("Polynitronen") beeinflussen. Polynitrone verfestigen bzw. strukturieren alle ungesättigten Polymere bei niedrigen Temperaturen und ohne Verwendung eines Katalysators. Dabei werden, abhängig von der Menge der eingesetzten Polynitrone, die optischen und die mechanischen Eigenschaften der lackierten Oberfläche, wie z.B. der Mattierungseffekt, beeinflusst. "Soft touch/feel"-Effekte werden in gängigen Lacksystemen durch Zugabe von bestimmten Wachsen- oder Silikonen oder direkt durch ein sehr weiches Polyurethan-Bindemittel erzielt. Eine weiche bis samtige Griffigkeit steht dabei meist im direkten Widerspruch zu der geforderten Kratzfestigkeit. Zudem führt insbesondere bei lackierten Holzoberflächen eine künstliche, unnatürliche Haptik oft zu einer subjektiven Abwertung durch den Nutzer. Stattdessen werden lackierte Oberflächen gefordert, deren Haptik der von natürlichem Holz entspricht.

Es besteht am Markt ein anhaltendes Bedürfnis nach Lackoberflächen mit einem weichen und natürlichen Griff in Verbindung mit Dauergebrauchsfestigkeit, welche in der Regel durch eine Verbesserung der Kratzfestigkeit erzielt wird. Beide Eigenschaften gemeinsam lassen sich schwer in einem Lacksystem vereinen.

Der Einsatz von Cellulose in Lacken ist bislang auf Cellulosederivate beschränkt. Dies ist darauf zurückzuführen, dass Cellulose in allen üblichen organischen Lösemitteln und insbesondere in Wasser absolut unlöslich sind. Einsatz in Lacken finden daher bislang nur Cellulosederivate (vgl. BASF-Handbuch, Lackiertechnik, Vincentz-Verlag, 2002, Kap. Rohstoffe, Seite 45). So wurde bereits in GB1320452 die Verwendung von Celluloseharzen als Filmbildner vorgeschlagen. Insbesondere Cellulosenitrat und Celluloseester sind als Zusatzstoff sowie als Filmbildner in Lacksystemen hinreichend beschrieben worden. So lässt sich Cellulose in unterschiedlicher Veresterungshöhe mit organischen und anorganischen Säuren zu Cellulosenitrat sowie Essig-, Priopion- und Buttersäureestern modifizieren. Die Ester der Cellulose mit organischen Säuren heben sich insbesondere durch eine verbesserte Lichtbeständigkeit und die verringerte Brennbarkeit von Cellulosenitrat ab. Daneben zeichnen sich Celluloseester durch eine gegenüber Cellulosenitrat verbesserte Hitze- und Kältebeständigkeit aus, zeigen dafür jedoch auch eine schlechtere Verträglichkeit mit anderen Harzen und organischen Lösemitteln. Teilweise kann dieser Nachteil durch den Einsatz von Mischestern ausgeglichen werden.

Der Einsatz von Cellulosederivaten zur Mikroverkapselung von Wirkstoffen wird in EP 1 818 370 beschrieben. Manche Additive, die dem Lack als Wirkstoffe zur Verbesserung der Korrosionsbeständigkeit oder als Insektizide zugesetzt werden, haben in der endgültigen Zusammensetzung nur eine geringe Stabilität, da Sie entweder mit anderen Zusatzstoffen in Wechselwirkung treten oder schlichtweg durch Lichteinwirkung oder Feuchtigkeit zersetzt werden. Dementsprechend offenbart EP 1 818 370 verkapselte Wirkstoffe, die keinen Einfluss auf die anderen Eigenschaften des ungehärteten Lackes, wie z.B. die Viskosität haben.

Füllstoffe auf Cellulosebasis werden üblicherweise als Methyl- oder Ethylether zur Steuerung der rheologischen Eigenschaften der flüssigen Lacksysteme eingesetzt. Dagegen ist über den Einsatz chemisch nicht modifizierter Cellulose in Lacken nur wenig bekannt. So wird beispielsweise in WO2011/075837 nanokristalline Cellulose und silanisierte nanokristalline Cellulose für Lackanwendungen beschrieben. Nanokristalline Cellulose (NCC) wird aus gereinigter Zellulose gewonnen, welche durch saure Hydrolyse und einer darauf folgenden Dispergierung, z. B. unter Ultraschallbehandlung, gewonnen wird. Die so in die einzelnen Fibrillen zerlegten Zellulosefasern haben einen Durchmesser von 5 - 70 nm und eine Länge von bis zu 250 nm. Neben einem Mattierungseffekt und einer Abnahme der hydrophoben Eigenschaften der Oberfläche wurde durch Einsatz von nanokristalliner Cellulose jedoch eine Abnahme der Kratzfestigkeit des eingesetzten Polyurethanlacks beobachtet. Der Effekt konnte erst durch den Einsatz silanisierter und damit chemisch modifizierter nanokristalliner Cellulose kompensiert bis überkompensiert werden.

WO2010/043397 erwähnt die Verwendung von ultrafeiner Cellulose als Additiv für Beschichtungen. Dabei handelt es sich ebenfalls um sehr feine Cellulosepartikel mit einem Durchmesser von 20 nm bis 15 µm. Der Einsatz der ultrafeinen Cellulose führte zu einem Mattierungseffekt und zu erhöhter Kratzfestigkeit der beschicheten Oberflächen.

Darüber hinaus sind Cellulose-haltige Lacksysteme, bedingt durch die Unlöslichkeit der Cellulose und Dichteunterschiede zum Filmbildner, nicht stabil und neigen zum raschen Absetzen. Dies gilt in besonderem Maße für Lacksysteme mit niedriger Viskosität. Die beim Lagern der Lacksysteme eintretende Entmischung erschwert die Handhabung. Der sich nach kurzer Zeit bildende, vor allem aus Cellulose bestehende, Bodensatz ist überaus kompakt und lässt sich nur schwer redispergieren.

Dem Einsatz chemisch nicht modifizierter Cellulose als Additivkomponente in Lacksystemen stehen somit gravierende Nachteile gegenüber, und es besteht daher Bedarf, diesen Nachteilen abzuhelfen.

Es wurde überraschend gefunden, dass ein Lacksystem, in welchem chemisch nicht modifizierte Cellulose mit einer bestimmten mittleren Faserlänge und einem bestimmten mittleren Aspektverhältnis eingesetzt wird, eine weich und natürlich anmutende Haptik sowie eine verbesserte Kratzfestigkeit der Beschichtung zeigt und, in Kombination mit einem Polyethylen- und/oder Fischer-Tropsch-Wachs und/oder Amidwachs und/oder biobasiertes Wachs, eine unvorhergesehene Stabilisierung der Lackformulierung gegen Sedimentation erfährt.

Darüber hinaus konnte durch Einsatz dieser Kombination überraschend eine signifikante Verbesserung der Kratzfestigkeit erzielt werden.

Gegenstand der Erfindung ist daher ein Lacksystem, enthaltend
a) chemisch nicht modifizierte Cellulose sowie
b) Polyolefin- und/oder Fischer-Tropsch-Wachse und/oder Amidwachse und/oder biobasierte Wachse sowie
c) Filmbildner und
d) optional Lösemittel oder Wasser sowie
e) optional Pigmente sowie
f) optional flüchtige und/oder nichtflüchtige Additive,
wobei die chemisch nicht modifizierte Cellulose eine mittlere Faserlänge zwischen 7 µm und 100 µm, bevorzugt zwischen 15 µm und 100 µm, besonders bevorzugt zwischen 15 µm und 50 µm sowie ein mittleres Aspektverhältnis von kleiner 5 aufweist, und die Wachse in einer Menge, bezogen auf das Lacksystem, von 0,1 bis 12,0 Gew.-%, eingesetzt werden.

Weiterer Erfindungsgegenstand ist ein Verfahren zur Verbesserung des Absetz- und Redispergierverhaltens und der Haptik und der Kratzfestigkeit von Lacksystemen, dadurch gekennzeichnet, dass dem Lacksystem ein oder mehrere Polyolefin- und/oder Fischer-Tropsch-Wachse und/oder Amidwachse und/oder biobasierte Wachse sowie chemisch nicht modifizierte Cellulose, die eine mittlere Faserlänge zwischen 7 µm und 100 µm, bevorzugt zwischen 15 µm und 100 µm, besonders bevorzugt zwischen 15 µm und 50 µm sowie ein mittleres Aspektverhältnis von ≤ 5 besitzt, zugegeben werden, wobei die Wachse in einer Menge, bezogen auf das Lacksystem, von 0,1 bis 12,0 Gew.-% eingesetzt werden. Das Lacksystem kann ferner Pigmente und Lösungsmittel oder Wasser sowie weitere flüchtige und/oder nichtflüchtige Additive enthalten.

Durch den Zusatz von chemisch nicht modifizierter Cellulose mit einer mittleren Faserlänge zwischen 7 µm und 100 µm, bevorzugt zwischen 15 µm und 100 µm, besonders bevorzugt zwischen 15 µm und 50 µm sowie einem mittleren Aspektverhältnis von kleiner 5, kann eine Verbesserung der Kratzfestigkeit und der Haptik einer Beschichtung gegenüber einer Beschichtung ohne Cellulosezusätze erzielt werden.

Die Lacksysteme können ferner Pigmente und Lösungsmittel und/oder Wasser sowie weitere flüchtige und/oder nichtflüchtige Additive enthalten.

Als Pigmente, Filmbildner, Hilfsstoffe und Lösemittel kommen prinzipiell alle geeignete Materialien in Betracht, wie sie beispielsweise in Ullmann's Encyclopedia of Industrial Chemistry, 5. Auflage, Vol. A 18, Kap. Paints & Coatings, Weinheim, 1991, Seite 368ff oder in BASF-Handbuch, Lackiertechnik, Vincentz-Verlag, 2002, Kap. Rohstoffe, Seite 28ff beschrieben sind.

Als Bindemittel werden analog zu DIN 971-1 die pigment- und füllstofffreien Anteile der getrockneten bzw. gehärteten Beschichtung verstanden. Sie enthalten neben dem Filmbildner noch weitere nichtflüchtige Additive. Als Beschichtung wird das ausgehärtete bzw. getrocknete Lacksystem verstanden. (vgl. BASF-Handbuch, Lackiertechnik, Vincentz-Verlag, 2002, Kap. Rohstoffe, Seite 26).

Als Filmbildner sind erfindungsgemäß sowohl Polyurethan-basierte sowie Epoxid-basierte Harze geeignet, beide sowohl in 1- als auch 2-komponentiger Ausführungsform. Weiterhin geeignete Filmbildner sind neben Cellulosederivaten, wie z. B. Cellulosenitrat und Celluloseestern, auch Alkydharze sowie Acrylatbasierte Systeme, wie z. B. Polymethylmethacrylat.

Epoxid-basierte Filmbildner sind Polyadditionsharze, welche durch mindestens bifunktionelle Epoxid-haltige Monomere, wie z. B. Bisphenol-A-bisglycidylether, Hexahydrophthalsäure-diglycidester etc., oder Präpolymere, oder Makromonomere in Verbindung mit einem weiteren Reaktionspartner (Härter) vernetzen. Sie werden daher üblicherweise als 2-Komponeten Harze verarbeitet. Typische Härter sind Amine, Säureanhydride oder Carbonsäuren. Als Amine werden häufig aliphatische Diamine, z. B. Ethylendiamin, Diethylentriamin, Triethylentetramin, etc., sowie cycloaliphatische Amine, wie z. B. Isophorondiamin, etc. oder aromatische Diamine, wie z. B. 1,3-Diaminobenzol, etc. eingesetzt. Als Säureanhydride finden beispielsweise Phthalsäureanhydrid oder Diester des Trimellithsäureanhydrids Anwendung. Derartige Epoxid-basierte Filmbildner und ihre Anwendung in Lacken sowie geeignete lösemittelbasierte, lösemittelfreie als auch wasserbasierende Ausführungsformen werden in Ullmann's Encyclopedia of Industrial Chemistry, 5. Auflage, Vol. A 18, Paints & Coatings, Kap. 2.10, Weinheim, 1991, Seite 407 - 412 beschrieben.

Polyurethan-basierte Filmbildner sind ebenfalls Polyadditionsharze, welche aus Isocyanat-haltigen Monomeren in Verbindung mit multivalenten Alkoholen zur Reaktion gebracht werden. Man unterscheidet, je nach chemischer Zusammensetzung des Harzes, zwischen 1-komponentigen PU-Lacken und 2-komponentigen PU-Lacken. Typische Isocyanat-haltige Monomere basieren beispielsweise auf Toluoldiisocyanat (TDI) und Diphenylmethandiisocyanat (MDI), Polymerem Diphenylmethandiisocyanat (PMDI), Hexamethylendiisocyanat (HDI), Isophorondiisocyanat (IPDI). Polyole werden typischerweise in unterschiedlicher Komplexität als Polyesterpolyole, Acrylsäure-Copolymer und Polyetherpolyole eingesetzt. PU-Harze gibt es als lösemittelhaltige, lösemittelfreie als auch als wasserbasierende Systeme. Detailliert sind PU-Harze für Lacke in Ullmann's Encyclopedia of Industrial Chemistry, 5. Auflage, Vol. A 18, Paints & Coatings, Kap. 2.9, Weinheim, 1991, Seite 403 - 407 beschrieben.

Polyester lassen sich einteilen in gesättigte und ungesättigte Polyesterbindemittel. Polyesterbindemittel werden aus multivalenten Carbonsäuren wie z. B. Terephthalsäure, Isophthalsäure, Trimellitsäure, Adipinsäure, Sebacinsäure, Dimerfettsäuren etc. und aus Polyolen wie z. B. Ethylenglykol, Diethylenglykol, Glycerin, Butandiol, Hexandiol, Trimethylolpropan etc. gebildet. Je nach Steifigkeit der Disäuren und der Polyole lassen sich die mechanische Eigenschaften von weich bis hart steuern. Ungesättigte Polyester verfügen zusätzlich noch über polymerisierbare Vinylgruppen, welche durch UV-Licht oder Radikalstarter vernetzen können. Polyester für Lacke sind in Ullmann's Encyclopedia of Industrial Chemistry, 5. Auflage, Vol. A 18, Paints & Coatings, Kap. 2.6&2.7, Weinheim, 1991, Seite 395 - 403 beschrieben.

Alkydharze gehören zur Gruppe der Polyester. Man kann diese nach ihrem Trocknungsmechanismus in luft- und ofentrocknende Systemen einteilen. Chemisch werden Alkydharze durch Reaktion mehrwertiger Alkohole, wie z. B. Glycerin, Pentaerythritol etc. mit mehrwertigen Säuren, wie z. B. Phthalsäure, -anhydrid, Terephthalsäure, etc. in Gegenwart von Ölen bzw. ungesättigten Fettsäuren, wie z. B. Linolsäure, Ölsäure etc. gebildet. Meist werden Alkydharzen vernetzungsbeschleunigende Katalysatoren, sog. Sikkative zugegeben. Alkydharze und deren Ausführungsformen sind beispielsweise in Ullmann's Encyclopedia of Industrial Chemistry, 5. Auflage, Vol. A 18, Paints & Coatings, Kap. 2.6, Weinheim, 1991, Seite 389 - 395 beschrieben.

Zu den wichtigsten Filmbildnern auf Cellulose-basis zählen Cellulosenitrat und die Celluloseester, wie z. B. Celluloseacetat, Celluloseacetobutyrate und -propionate. Rohstoff für entsprechende Cellulose-Derivate ist gereinigte native Cellulose, welche meist direkt aus Holz gewonnen wird. Derivatisierungsmittel sind beispielsweise Nitriersäure sowie die Säureanhydride von z. B. Essigsäure, Priopionsäure, Buttersäure. Im Gegensatz zu chemisch unbehandelter Cellulose sind Cellulosederivate in organischen Lösemitteln, insbesondere in Aceton und Essigsäureethylester löslich. Cellulosederivat-Filmbildner sind in Ullmann's Encyclopedia of Industrial Chemistry, 5. Auflage, Vol. A 18, Paints & Coatings, Kap. 2.2, Weinheim, 1991, Seite 369 - 374 beschrieben.

Wegen ihrer sehr guten Verfügbarkeit ist Cellulose industriell von besonderem Interesse. Cellulose ist die in der Natur am häufigsten vorkommende organische Verbindung und damit auch das häufigste Polysaccharid. Als nachwachsender Rohstoff stellt sie mit etwa 50 Gew.-% den Hauptbestandteil von Pflanzenzellwänden dar. Cellulose ist ein Polymer bestehend aus dem Monomer Glucose, welches über β-1,4-glykosidische Verbindungen verknüpft ist und aus mehreren hundert bis zehntausend Wiederholeinheiten besteht. Die Glucosemoleküle sind in der Cellulose jeweils um 180° zueinander verdreht. Dadurch erhält das Polymer, anders als z. B. das Glucose-Polymer Stärke, eine lineare Form. Die industrielle Nutzung von Cellulose als Rohstoff der chemischen Industrie erstreckt sich über verschiedene Anwendungsbereiche. Die stoffliche Nutzung umfasst dabei u. a. die Verwertung als Papierrohstoff sowie für die Herstellung von Kleidern. Die dafür hauptsächlich genutzten Cellulosequellen sind Holz und Baumwolle.

In Holz liegt Cellulose vor allem in Form von feinen kristallinen Mikrofibrillen vor, welche über H-Brücken zu Makrofibrillen gebündelt sind. In Verbindung mit Hemicellulose und Lignin bilden diese die Zellwand der Pflanzenzellen.

Die industrielle Gewinnung von Cellulose aus Holz erfolgt über verschiedene Zellaufschlussverfahren. Bei diesen Verfahren werden Lignin und Hemicellulose abgebaut und gelöst. Unter den chemischen Aufschlussverfahren unterscheidet man das Sulfat- (alkalisch) und das Sulfit-Verfahren (sauer). Beim Sulfitverfahren werden beispielsweise Holz-Hackschnitzel mit Wasser und Schwefeldioxid (SO₂) unter erhöhtem Druck und erhöhter Temperatur aufgeschlossen. In diesem Prozess wird das Lignin durch Sulfonierung gespalten und so zu einem wasserlöslichen Salz, der Ligninsulfonsäure, transformiert, die leicht aus den Fasern entfernt werden kann. Die vorhandene Hemicellulose wird, je nach pH-Wert welcher im Holz vorhanden ist, durch saure Hydrolyse in Zucker umgewandelt. Die aus diesem Verfahren gewonnen Cellulose kann nun chemisch weiter modifiziert bzw. derivatisiert werden. Alternativ kann nach Waschung der chemisch unbehandelte Füllstoff gewonnen werden. Weitere weniger bedeutende Aufschlussverfahren basieren auf mechanischen und thermo-mechanischen sowie auf chemisch-thermo-mechanischen Aufschlussverfahren.

Im Sinne der Erfindung wird die Cellulose bei diesen Aufschlussverfahren chemisch nicht modifiziert. In Ullmann's Encyclopedia of Industrial Chemistry, 5. Auflage, Vol. A 5, Weinheim 1986, Kap. Cellulose, Seite 375 ff. findet sich eine detailliertere Beschreibung zu Cellulose.

Geeignet im Sinne der Erfindung ist chemisch nicht modifizierte Cellulose mit einer Partikelgröße gemessen mittels Laserbeugung mit einem D99-Wert von ≤ 100 µm, bevorzugt bei ≤ 50 µm. Der D99-Wert gibt die in dem Partikelgemisch maximal vorhandene Teilchengröße an. Entsprechende Cellulosepulver können gegebenenfalls auch aus gröberem Cellulosegut durch Fraktionieren, z. B. Sichten oder Sieben, oder durch Mikronisierung gewonnen werden. Cellulose wird etwa in Ullmann's Encyclopedia of Industrial Chemistry, 5. Auflage, Vol. A 5, Weinheim 1986, Kap. Cellulose, Seite 375 ff. beschreiben.

Die chemisch nicht modifizierte Cellulose wird, bezogen auf das Lacksystem, in einer Menge von 0,1 bis 12 Gew.-%, bevorzugt von 0,2 bis 6 Gew.-%, besonders bevorzugt von 1,0 bis 2,0 Gew.-% eingesetzt.

Als Wachskomponente sind synthetische Kohlenwasserstoffwachse, wie z. B. Polyolefinwachse, geeignet. Diese können durch thermischen Abbau verzweigter oder unverzweigter Polyolefin-Kunststoffe oder durch direkte Polymerisation von Olefinen hergestellt werden. Als Polymerisationsverfahren kommen beispielsweise radikalische Verfahren in Frage, wobei die Olefine, in der Regel Ethylen, bei hohen Drücken und Temperaturen zu mehr oder minder verzweigten Polymerketten umgesetzt werden; daneben kommen Verfahren in Betracht, bei denen Ethylen und/oder höhere 1-Olefine wie z. B. Propylen, 1 Buten, 1-Hexen etc. mit Hilfe metallorganischer Katalysatoren, beispielsweise Ziegler-Natta oder Metallocenkatalysatoren, zu unverzweigten oder verzweigten Wachsen polymerisiert werden. Entsprechende Methoden zur Herstellung von Olefin-Homo- und Copolymerwachsen sind beispielsweise in Ullmann's Encyclopedia of Industrial Chemistry, 5. Auflage, Vol. A 28, Weinheim 1996 in Kapitel 6.1.1./6.1.2. (Hochdruckpolymerisation, (Wachse), Kapitel 6.1.2. (Ziegler-Natta-Polymerisation, Polymerisation mit Metallocenkatalysatoren) sowie Kapitel 6.1.4. (thermischer Abbau) beschrieben.

Weiterhin können sogenannte Fischer-Tropsch-Wachse eingesetzt werden. Diese werden katalytisch aus Synthesegas hergestellt und unterscheiden sich von Polyethylenwachsen durch niedrigere mittlere Molmassen, engere Molmassenverteilungen und niedrigere Schmelzviskositäten.

Die eingesetzten Kohlenwasserstoffwachse können unfunktionalisiert oder durch polare Gruppen funktionalisiert sein. Der Einbau solcher polarer Funktionen kann nachträglich durch entsprechende Modifizierung der unpolaren Wachse erfolgen, z. B. durch Oxidation mit Luft oder durch Aufpfropfung polarer Olefinmonomere, beispielsweise α,β ungesättigter Carbonsäuren und/oder deren Derivaten, etwa Acrylsäure oder Maleinsäureanhydrid. Ferner können polare Wachse durch Copolymerisation von Ethylen mit polaren Comonomeren, beispielsweise Vinylacetat oder Acrylsäure, hergestellt werden; weiterhin durch oxidativen Abbau von höhermolekularen, nicht wachsartigen Ethylen-Homo- und Copolymeren. Entsprechende Beispiele finden sich etwa in Ullmann's Encyclopedia of Industrial Chemistry, 5. Auflage, Vol. A 28, Weinheim 1996, Kapitel 6.1.5.

Geeignete polare Wachse sind außerdem Amidwachse, wie sie z. B. durch Umsetzung von längerkettigen Carbonsäuren, z. B. Fettsäuren, mit ein- oder mehrwertigen Aminen zugänglich sind. Hierfür typischerweise verwendete Fettsäuren weisen Kettenlängen im Bereich zwischen 12 und 24, bevorzugt zwischen 16 und 22 C-Atomen auf und können gesättigt oder ungesättigt sein. Bevorzugt eingesetzte Fettsäuren sind die C₁₆- und C₁₈-Säuren, insbesondere Palmitinsäure und Stearinsäure oder Gemische aus beiden Säuren. Als Amine kommen neben Ammoniak insbesondere mehrwertige, z. B. zweiwertige organische Amine in Frage, wobei Ethylendiamin bevorzugt ist. Besonders bevorzugt ist die Verwendung von unter der Bezeichnung EBS-Wachs (Ethylenbisstearoyldiamid) handelsüblichem, aus technischer Stearinsäure und Ethylendiamin hergestelltem Wachs.

Weiterhin können biobasierte Wachse eingesetzt werden, bei denen es sich in der Regel um polare Esterwachse handelt. Im Allgemeinen werden unter biobasierten Wachsen jene Wachse verstanden, die auf einer nachwachsenden Rohstoffbasis basieren. Hierbei kann es sich sowohl um native, als auch um chemisch modifizierte Esterwachse handeln. Typische native biobasierte Wachse sind beispielsweise in Ullmann's Encyclopedia of Industrial Chemistry, 5. Auflage, Vol. A 28, Weinheim 1996 in Kapitel 2. (Wachse) beschrieben. Dazu gehören beispielsweise Palmenwachse wie Carnaubawachs, Gräserwachse wie Candelillawachs, Zuckerrohrwachs und Strohwachse, Bienenwax, Reiswachs, etc.. Chemisch modifizierte Wachse gehen meist durch Veresterung, Umesterung, Amidierung, Hydrierung, etc. aus pflanzenölbasierenden Fettsäuren hervor. Beispielweise fallen hierunter auch Metatheseprodukte von Pflanzenölen.

Zu den biobasierten Wachsen zählen darüber hinaus auch Montanwachse, entweder in unmodifizierter oder raffinierter bzw. derivatisierter Form. Detaillierte Angaben zu derartigen Wachsen finden sich z. B. in Ullmann's Encyclopedia of Industrial Chemistry, 5. Auflage, Vol. A 28, Weinheim 1996, Kapitel 3. (Wachse).

Für die Einarbeitung der Wachse in das Lacksystem kommen unterschiedliche Verfahren in Frage. Beispielsweise kann man das Wachs in einem Lösemittel heiß lösen und erhält durch anschließendes Abkühlen feinteilige, flüssige Dispersionen oder Massen von pastenartiger Konsistenz, die mit dem Lacksystem abgemischt werden. Möglich ist weiterhin die Vermahlung der Wachse in Gegenwart von Lösemitteln. Nach einer weitverbreiteten Technologie werden die Wachse auch als Feststoffe in Form von feinstverteilten Pulvern ("Mikronisaten") in die Lackrezeptur eingerührt. Die Feinstpulver werden entweder durch Mahlung, z. B. in Luftstrahlmühlen, oder durch Versprühung hergestellt. Die mittleren Partikelgrößen (D50- bzw. Medianwerte) derartiger Pulver liegen in der Regel im Bereich zwischen 5 und 15 µm. Der D99-Wert der eingesetzten Wachsmikronisate liegt bei maximal 100 µm, bevorzugt bei maximal 60 µm. besonders bevorzugt bei maximal 50 µm. Voraussetzung für die Vermahlbarkeit zu Mikronisat ist eine nicht zu niedrige Härte bzw. Sprödigkeit der Wachsprodukte.

Die Wachse werden, bezogen auf das Lacksystem, in einer Menge von 0,1 bis 12,0 Gew.-%, bevorzugt von 0,2 bis 6,0 Gew.-%, besonders bevorzugt von 1,0 bis 2,0 Gew.-% eingesetzt.

Die chemisch nicht modifizierte Cellulose kann entweder vor oder nach der Additivierung des Lacksystems mit Wachs eindispergiert werden; auch eine gemeinsame Additivierung durch Einarbeitung eines Gemisches aus mikronisiertem Wachs und nicht modifizierte Cellulose ist möglich. Als besonders vorteilhaft hat es sich erwiesen, die nicht modifizierte Cellulose und das Wachs gemeinsam zu mikronisieren und als mikronisierte Mischung einzusetzen. Auch hier kann die mikronisierte Mischung vor oder nach der Additivierung des Druckfarbensystems eindispergiert werden. Die Dispergiermethoden sind dem Fachmann bekannt; in der Regel werden hierzu schnelllaufende Rühr- oder Mischorgane, z. B. Mizer- oder Dissolverscheiben verwendet.

In Kombination mit Polyolefin-, und/oder Fischer-Tropsch- und/oder Amidwachsen und/oder biobasiertem Wachs zeigt eine chemisch nicht modifizierte Cellulose in einem flüssigen Lacksystem eine verminderte Absetztendenz, der sedimentierte Bodensatz kann leichter redispergiert werden. Ferner zeigt der abgebundene Lack eine signifikante Kratzfestigkeit.

Die erfindungsgemäßen Lacksysteme können zusätzliche flüchtige und nichtflüchtige Additive wie z. B. Weichmacher, Vernetzungsmittel, Vernetzungsbeschleuniger, UV-Stabilisatoren, Antioxidantien , Tenside, Benetzungshilfsmittel, Entschäumer, Thixotropie-und andere Hilfsmittel in üblichen Additivkonzentrationen enthalten.

Besonders geeignet erweisen sich erfindungsgemäße Lacksysteme bei der Verwendung als Holzlack, insbesondere zur Lackierung von Holzmöbeln, Holzfußböden und Holzgegenständen jeglicher Art. Der Einsatz chemisch nicht modifizierter Cellulose mit erfindungsgemäßer Dimension bewirkt einen weichen bis holzartigen und natürlichen Griff (Haptik) im Gegensatz zu einem ungefüllten Lack.

Die nachfolgenden Beispiele sollen die Erfindung näher erläutern, ohne sie jedoch darauf zu beschränken.

### Beispiele:

### Anwendungstechnische Prüfungen

Als Rohstoff für die erfindungsgemäß chemisch nicht modifizierten Cellulosen wurden Arbocel UFC M 8, Arbocel BE 600-30 PU und Arbocel BWW 40 (Vergleich) eingesetzt. Als Vergleichssubstanz dienten Maisstärke-Partikel (Hersteller Roquette GmbH), welche durch Sichtung hinsichtlich der Partikelgröße fraktioniert wurden. So konnten u. a. unterschiedliche Partikelgrößenverteilungen getestet werden. Die Arbocel Typen unterscheiden sich ebenfalls hinsichtlich ihrer Partikelgrößenverteilungen.

Als Wachse wurden folgende handelsübliche Produkte aus dem Sortiment der Clariant Produkte (Deutschland) GmbH verwendet:
- Ceridust 2051: Mikronisiertes Fischer-Tropsch- Wachs; D99 < 50 µm.
- Ceridust 3620: Mikronisiertes Polyethylenwachs; D99 < 50 µm.
- Ceridust 5551: Mikronisiertes Montanwachs; D99 < 50 µm.

Die Bestimmung der charakteristischen Partikelgrößen D50, D90 und D99 erfolgte nach ISO 13320-1 auf Basis einer Laserbeugungsmessung mit Hilfe eines Mastersizer 2000 (Malvern). Die Proben wurden dazu mit einer Trockendispergiereinheit (Scirocco 2000) vorbehandelt.

**Tabelle 1: Partikelgröße der eingesetzten Wachse / glykosidischen Polymere.**

| | D50 [µm] | D90 [µm] | D99 [µm] |
|---|---|---|---|
| native Maistärke | 14,2 | 23,2 | 38,8 |
| gesichtete Maisstärke | 8,8 | 12,6 | 21,3 |
| Arbocel UFC M 8 | 11,5 | 24,7 | 45,2 |
| Arbocel BE 600-30 PU | 34,0 | 85,6 | 276,0 |
| Arbocel BWW 40 | 64,3 | 210,7 | 593,7 |
| Ceridust 2051 | 7,0 | 12,8 | 21,2 |
| Ceridust 3620 | 8,7 | 15,4 | 24,7 |
| Mischung aus mikronisiertem Polyethylenwachs und mikronisiertem oxidierten Poyethylenwachs | 9,1 | 15,4 | 24,7 |
| Ceridust 5551 | 8,7 | 14,7 | 24,5 |
| Mischung aus mikronisiertem Polyethylenwachs mit Stärke | 6,1 | 11,0 | 18,2 |
| Arbocel UFC M 8 / Ceridust 3620 (50:50), Pulvermischung | 9,4 | 18,7 | 33,5 |
| Arbocel BE 600-30 / Ceridust 3620 (50:50), Pulvermischung | 15,2 | 62,2 | 176,2 |

### Bestimmung der Kratzfestigkeit

Zur Bestimmung der Kratzfestigkeit wurde das zu prüfende Lacksystem auf eine Glasoberfläche aufgetragen und mit einem Härteprüfstab der Firma Erichsen (TYP 318) getestet. Die Kratzfestigkeit wurde in Anlehnung an DIN ISO 1518 mit dem Härteprüfstab und einer Gravierspitze nach Bosch mit einem Durchmesser von 0,75 mm bestimmt. Die Kratzspur sollte ca. 10 mm lang sein und eine deutliche Markierung im Lack hinterlassen. Durch Justierung der Federspannung können verschiedene Kräfte auf die Lackoberfläche ausgeübt werden. Die Kraft, welche erforderlich ist um eine deutliche Markierung im Lack zu hinterlassen, wurde für unterschiedlichste Lackformulierungen gemessen.

### Beurteilung der Haptik

Die Beurteilung der Haptik der einzelnen Lackoberflächen wurde durch Reiben mit dem Handrücken bestimmt. Ferner wurde die Beurteilung von 20 Personen durchgeführt, um unabhängige Meinungen zu erhalten. Die Beurteilung in den Tabellen entspricht der Meinung der Mehrheit.

### Bestimmung des Gleitreibungskoeffizienten

Der Gleitreibungskoeffizient wurde mit einem Friction-Peel Tester, Model 225-1, der Firma Thwing-Albert Instruments Company in Anlehnung an die ASTM-Methode D2534 ermittelt. Dazu wurde eine mit dem zu testenden Lack beschichtete Glasplatten auf das Analysengerät aufgebracht. Anschließend wurde ein mit Leder bezogener Metallschlitten (349 g) auf die beschichtete Oberfläche aufgesetzt. Der Schlitten wurde anschließend mit konstanter Geschwindigkeit (15cm/min) über die beschichtete Glasoberfläche gezogen. Gemessen wurde die Kraft, die benötigt wird um den Schlitten zu ziehen. Da der dynamische Gleitreibungskoeffizient ermittelt wurde, konnte die Anfangskraft, welche benötigt wird um den Schlitten in Bewegung zu setzen, vernachlässigt werden.

In einem Messzylinder wurden je 4 g der zu untersuchenden Probe in 200 g eines 2 Komponenten lösemittelhaltigen Polyurethanlack (2 K PUR) und in 200 g Butylacetat dispergiert; die Dispersion wurde stehen gelassen. Die Schichtdicke des abgesetzten Bodensatzes wurde nach vorgegebenen Zeitintervallen abgelesen. Je kleiner der ermittelte Wert ist, desto dichter ist der Bodensatz und desto höher ist die Absetzneigung. Die Redispergierbarkeit des Bodensatzes wurde durch vorsichtiges Schwenken des Messzylinders geprüft. Die Resultate sind in Tabelle 2 aufgeführt.

**Tabelle 2: Absetz- sowie Redispergierverhalten**

| Beispiel | | abgelesene Dicke des Bodensatzes [cm] | | | Redispergierbarkeit |
|---|---|---|---|---|---|
| | | nach 1 h | nach 24 h | nach 1 Woche | nach 1 Woche |
| 1 (Vgl.) | Native Maisstärke in 2 K PUR | 0,9 | 1,1 | 1,1 | Bodensatz kompakt, mehrmaliges Kippen für Redispergierung erforderlich |
| 2 (Vgl.) | Arbocel BE600-30 PU in 2 K PUR | 0,3 | 1,9 | 1,9 | Bodensatz kompakt, mehrmaliges Kippen für Redispergierung erforderlich |
| 3 (Erf.) | Arbocel BE600-30 PU / Ceridust 3620 (50:50), Pulvermischung in 2 K PUR | Kein Bodensatz erkennbar | 2,2 | 2,2 | Bodensatz wolkig bis schwebend; einmaliges Kippen reicht für Redispergierung |
| 4 (Vgl.) | Native Maisstärke in Butylacetat | 0,8 | 1,0 | 1,0 | Bodensatz kompakt, mehrmaliges Kippen für Redispergierung erforderlich |
| 5 (Vgl.) | Arbocel BE600-30 PU in Butylacetat | 2,4 | 2,4 | 2,4 | Bodensatz wolkig bis schwebend; einmaliges Kippen reicht für Redispergierung |
| 6 (Erf.) | Arbocel BE600-30 PU / Ceridust 3620 (50:50), Pulvermischung in Butylacetat | 3,6 | 3,5 | 3,5 | Bodensatz wolkig bis schwebend; einmaliges Kippen reicht für Redispergierung |

### Prüfung des Absetz- und Redispergierverhaltens

Tabelle 2 zeigt, je höher die Dicke des Bodensatzes, desto besser lassen sich die Partikel redispergieren. Native Maisstärke bildet in beiden Systemen einen kompakten Bodensatz, welcher sich nur schwer redispergieren lässt. Die Pulvermischungen aus nativer Cellulose Arbocel BE600-30 PU und Polyethylenwachs zeigten in beiden Systemen eine deutlich verringerte Absetzneigung und die besten Redispergierbarkeiten. Die native Cellulose Arbocel BE600-30 PU alleine zeigte ebenfalls eine verbesserte Absetzneigung.lm 2 K PUR Lack war die Redispergierbarkeit schwer möglich, in Butylacetat hingegen problemlos möglich.

Prüfung in einem 2 Komponenten Polyurethanlack auf Lösemittelbasis:
Eingesetzt wurde ein PUR Lack mit folgender Zusammensetzung:
Rezeptur:

**1. Komponente**

| | |
|---|---|
| Desmophen 1300 / 75 %ig in Xylol | 32,0 Gew.-% |
| Walsroder Nitrocellulose E 510 in 20 % ESO | 1,5 Gew.-% |
| Acronal 4 L 10 %ig in Ethylacetat | 0,2 Gew.-% |
| Baysilone OL 17 10 %ig in Xylol | 0,2 Gew.-% |
| Ethylacetat | 10,4 Gew.-% |
| Butylacetat | 11,0 Gew.-% |
| Methoxypropylacetat | 10,8 Gew.-% |
| Xylol | 8,9 Gew.-% |
| | 75,0 Gew.-% |

**2. Komponente**

| | |
|---|---|
| Desmodur IL | 14,2 Gew.-% |
| Desmodur L 75 | 9,4 Gew.-% |
| Xylol | 1,4 Gew.-% |
| | 25,0 Gew.-% |

Das beschriebene Lacksystem wird mit 2 % beziehungsweise 4 % Mikronisat (Wachs beziehungsweise Cellulose beziehungsweise Wachs/Cellulose-Mischung) versetzt und mit einer Rakel (60 µm) auf eine Glasoberfläche aufgetragen. Nach einer Trocknungszeit von 24 Stunden sowie einer anschließenden 24-stündigen Lagerung in einem Klimaraum können die Kratzfestigkeit sowie der Gleitreibungskoeffizient bestimmt werden. Die Werte sind in Tabelle 3 illustriert.

**Tabelle 3: Haptik, Gleitreibung und Kratzfestigkeit der getesteten Lacksysteme.**

| Beispiel | Additiv | Haptik | Gleitreibungskoeffizient | Kratzfestigkeit [N] |
|---|---|---|---|---|
| 7 (Vgl.) | ohne Wachs | unnatürlich | 0,83 | 0,1 |
| 8 (Vgl.) | 2 % Ceridust 5551 | sehr soft/weich | 0,58 | 0,5 |
| 9 (Vgl.) | 4 % Ceridust 5551 | sehr soft/weich | 0,52 | 0,9 |
| 10 (Vgl.) | 2 % Ceridust 3715 | soft | 0,38 | 0,3 |
| 11 (Vgl.) | 4 % Ceridust 3715 | soft | 0,34 | 0,4 |
| 12 (Vgl.) | 2 % Ceridust 3620 | soft | 0,52 | 0,8 |
| 13 (Vgl.) | 4 % Ceridust 3620 | soft | 0,44 | 0,9 |
| 14 (Vgl.) | 2 % Ceridust 2051 | soft | 0,39 | 0,7 |
| 15 (Vgl.) | 4 % Ceridust 2051 | soft | 0,45 | 0,9 |
| 16 (Erf.) | 2 % Arbocel UFC M8 50 % + Ceridust 3620 50 % | sehr soft/weich | 0,56 | 1,0 |
| 17 (Erf.) | 4 % Arbocel UFC M8 50 % + Ceridust 3620 50% | sehr soft/weich | 0,52 | 1,1 |
| 18 (Erf.) | 2 % Arbocel BE600-30PU 50 % + Ceridust 3620 50 % | natürliche Holzhaptik | 0,69 | 1,0 |
| 19 (Erf.) | 4 % Arbocel BE600-30PU 50 % + Ceridust 3620 50 % | natürliche Holzhaptik | 0,70 | 1,2 |
| 20 (Vgl.) | 2 % Maisstärke + PE Wachs 50/50 gemeinsam mikronisiert | soft | 0,67 | 0,8 |
| 21 (Vgl.) | 4 % Maisstärke + PE Wachs 50/50 gemeinsam mikronisiert | soft | 0,66 | 0,8 |
| 22 (Vgl.) | 2 % Maisstärke Roquette fein | soft | 0,63 | 0,8 |
| 23 (Vgl.) | 4 % Maisstärke Roquette fein | soft | 0,60 | 0,6 |
| 24 (Vgl.) | 2 % Maisstärke Roquette normal | soft | 0,73 | 0,7 |
| 25 (Vgl.) | 4 % Maisstärke Roquette normal | soft | 0,78 | 0,6 |
| 26 (Vgl.) | 2 % Arbocel UFC M8 | sehr soft/weich | 0,68 | 0,6 |
| 27 (Vgl.) | 4 % Arbocel UFC M8 | sehr soft/weich | 0,59 | 0,8 |
| 28 (Vgl.) | 2 % Arbocel BE600-30 PU | natürliche Holzhaptik | 0,75 | 0,8 |
| 29 (Vgl.) | 4 % Arbocel BE600-30 PU | natürliche Holzhaptik | 0,76 | 1,1 |
| 30 (Vgl.) | 2 % Arbocel BWW40 | rau | 0.81 | 0,6 |
| 31 (Vgl.) | 4 % Arbocel BWW40 | rau | - | 0,8 |

Die Kratzfestigkeit des zuvor beschriebenen Polyurethanlackes weist mit 0,1 N (Beispiel 3) einen sehr geringen Wert auf. Durch die Zugabe der Arboceltypen Arbocel UFC M8 und Arbocel BE 600-30 PU (Beispiele 22 - 25) konnte eine deutliche Erhöhung der Kratzfestigkeit erzielt werden. Speziell die Zugabe von Arbocel BE 600-30 PU (Beispiele 24 und 25) erhöht die Kratzfestigkeit des eingesetzten Lackes in besonders hohem Maße. Durch Einsatz von Wachs/Cellulose-Mischungen (Beispiele 12 - 15) wird die Kratzfestigkeit des Lacksystems noch weiter erhöht.

Die Zugabe von chemisch unmodifizierter Cellulose einer bestimmten Faserlänge sowie eines bestimmten Aspektverhältnisses zum beschriebenen Lacksystem hat einen positiven Effekt auf dessen Haptik. Die in Beispiel 22 und 23 beschriebenen Lacksysteme, welche beide Arbocel UFC M8 als Additiv-Komponente enthalten, zeichnen sich durch eine besonders weich anmutende Haptik aus. Durch Zugabe von Arbocel BE 600-30 hingegen wurde ein holzartiger und natürlicher Griff erzielt.

Wird dem beschriebenen Lacksystem eine Kombination aus Cellulose und Wachs zugegeben (Beispiele 12 - 15), so entspricht die Haptik des resultierenden Lackes dem des entsprechenden Cellulose-haltigen Lacks. Zudem wird durch die Kombination von Cellulose und Wachs die Kratzfestigkeit in zuvor beschriebener Weise deutlich verbessert, so dass insbesondere in den Beispielen 14 und 15 eine natürliche holzartige Haptik in Kombination mit einer stark erhöhten Kratzfestigkeit realisiert werden konnte.

Arbocel BWW 40 wurde nicht in Kombination mit Wachs getestet, da dieses, bedingt durch die Größe der Cellulosepartikel, nicht problemlos appliziert werden konnte. Auch konnte bei Verwendung von 4 Prozent Arbocel BWW 40 (Beispiel 27) kein Wert für die Kratzfestigkeit gemessen werden, da die Lackoberfläche sehr inhomogen war.

Durch die Zugabe eines mikronisierten Wachses zum beschriebenen Lacksystem wird die gewünschte Erhöhung der Kratzfestigkeit durch eine Erniedrigung des Gleitreibungskoeffizienten erreicht (Beispiele 8 - 15). Dies ist, zum Beispiel bei der Beschichtung von Böden, unerwünscht.

Die Zugabe von chemisch nicht modifizierter Cellulose zum beschriebenen Lacksystem führt zu einer Erhöhung der Kratzfestigkeit des Lackes bei nur geringfügiger Erniedrigung des Gleitreibungskoeffizienten (Beispiele 26 - 29). Dieser positive Effekt wird auch bei der Verwendung von chemisch unmodifizierter Cellulose in Kombination mit einem mikronisierten Wachs erreicht werden (Beispiele 16 - 19).

Prüfung in einem wasserbasierenden Polyurethanlack:
Eingesetzt wurde ein PUR Lack mit folgender Zusammensetzung:

**Rezeptur**

| | |
|---|---|
| Bayhydrol UH 2342 | 89,0 Gew.-% |
| Entmineralisiertes Wasser | 3,0 Gew.-% |
| Dipropylenglykoldimethylether | 3,0 Gew.-% |
| BYK 028 | 0,8 Gew.-% |
| BYK 347 | 0,5 Gew.-% |
| Schwego Pur 6750, 5 %ig in Wasser | 1,5 Gew.-% |
| | 100,0 Gew.-% |

Auch dieses Lacksystem wurde mit 2 % beziehungsweise 4 % Mikronisat versetzt und mit einer Rakel (60 µm) auf eine Glasoberfläche aufgetragen. Nach einer Trocknungszeit von 24 Stunden und einer anschließenden 24-stündigen Lagerung in einem Klimaraum konnte die Bestimmung der Kratzfestigkeit und des Gleitreibungskoeffienten erfolgen. Die Werte sind in Tabelle 4 illustriert.

**Tabelle 4**

| Beispiel | Additiv | Haptik | Gleitreibungskoeffizient | Kratzfestigkeit [N] |
|---|---|---|---|---|
| 32 (Vgl.) | ohne Wachs | unnatürlich | 0,57 | 0,1 |
| 33 (Vgl.) | 2 % Ceridust 5551 | sehr soft/weich | 0,59 | 0,5 |
| 34 (Vgl.) | 4 % Ceridust 5551 | sehr soft/weich | 0,51 | 0,7 |
| 35 (Vgl.) | 2 % Ceridust 3715 | soft | 0,52 | 0,5 |
| 36 (Vgl.) | 4 % Ceridust 3715 | soft | 0,46 | 0,6 |
| 37 (Vgl.) | 2 % Ceridust 3620 | soft | 0,51 | 0,5 |
| 38 (Vgl.) | 4 % Ceridust 3620 | soft | 0,46 | 0,5 |
| 39 (Vgl.) | 2 % Ceridust 2051 | soft | 0,47 | 0,6 |
| 40 (Vgl.) | 4 % Ceridust 2051 | soft | 0,43 | 0,7 |
| 41 (Erf.) | 2 % Arbocel UFC M8 50 % + Ceridust 3620 50 % | sehr soft/weich | 0,63 | 0,8 |
| 42 (Erf.) | 4 % Arbocel UFC M8 50 % + Ceridust 3620 50% | sehr soft/weich | 0,55 | 0,9 |
| 43 (Erf.) | 2 % Arbocel BE600-30PU 50 % + Ceridust 3620 50 % | natürliche Holzhaptik | 0,70 | 1,1 |
| 44 (Erf.) | 4 % Arbocel BE600-30PU 50 % + Ceridust 3620 50 % | natürliche Holzhaptik | 0,69 | 1,2 |
| 45 (Vgl.) | 2 % Maisstärke + PE Wachs 50/50 gemeinsam mikronisiert | soft | 0,54 | 0,4 |
| 46 (Vgl.) | 4 % Maisstärke + PE Wachs 50/50 gemeinsam mikronisiert | soft | 0,48 | 0,5 |
| 47 (Vgl.) | 2 % Maisstärke Roquette fein | soft | 0,66 | 0,3 |
| 48 (Vgl.) | 4 % Maisstärke Roquette fein | soft | 0,64 | 0,4 |
| 49 (Vgl.) | 2 % Maisstärke Roquette normal | soft | 0,71 | 0,3 |
| 50 (Vgl.) | 4 % Maisstärke Roquette normal | soft | 0,70 | 0,4 |
| 51 (Vgl.) | 2 % Arbocel UFC M8 | sehr soft/weich | 0,59 | 0,6 |
| 52 (Vgl.) | 4 % Arbocel UFC M8 | sehr soft/weich | 0,59 | 0,9 |
| 53 (Vgl.) | 2 % Arbocel BE600-30 PU | natürliche Holzhaptik | 0,73 | 0,8 |
| 54 (Vgl.) | 4 % Arbocel BE600-30 PU | natürliche Holzhaptik | 0,74 | 1,1 |
| 55 (Vgl.) | 2 % Arbocel BWW40 | rau | 0,76 | 0,6 |
| 56 (Vgl.) | 4 % Arbocel BWW40 | rau | - | 0,8 |

Durch die Zugabe von Arbocel UFC M8 und Arbocel BE 600-30 PU (Beispiele 47 - 50) zum beschriebenen Lacksystem konnte eine Erhöhung der Kratzfestigkeit erzielt werden. Die Haptik des resultierenden Lacksystems variiert je nach Größe des eingesetzten Cellulose-Mikronisats. Die etwas gröbere Variante Arbocel BE 600-30 PU vermittelte dabei eine natürliche Holzhaptik. Die Kombination von Arbocel mit einem Wachs zeigte die besten Ergebnisse im Hinblick auf Kratzfestigkeit. Die Haptik der Lacke, welchen Mischungen von Cellulose- und Wachs-Mikronisat zugesetzt wurden, war vergleichbar mit denen welche allein durch die Zugabe von Arboceltypen modifiziert wurden. Durch die Kombination eines Wachs- sowie eines Cellulose-Mikronisats lässt sich mit dem beschriebenen Lacksystem eine natürliche Holzhaptik in Verbindung mit einer erhöhten Kratzfestigkeit realisieren.

Arbocel BWW 40 wurde auch in diesem System nicht in Kombination mit Wachs getestet, da es, bedingt durch die Größe der Cellulosepartikel, ebenfalls Probleme beim Applizieren verursachte. Analog zum Lösemittel basierenden System konnte bei einer Konzentration von 4 Prozent Arbocel BWW 40 (Beispiel 52) kein Wert für die Kratzfestigkeit gemessen werden, da die Lackoberfläche sehr inhomogen war.

Die Zugabe von chemisch nicht modifizierter Cellulose zum beschriebenen Lacksystem führt zu einer Erhöhung der Kratzfestigkeit des Lackes bei nur geringfügiger Erniedrigung des Gleitreibungskoeffizienten (Beispiele 51 - 54). Dieser positive Effekt wird auch bei der Verwendung von chemisch unmodifizierter Cellulose in Kombination mit einem mikronisierten Wachs erreicht werden (Beispiele 41 - 44).

Prüfung in einem wasserbasierenden Acryllack:
Eingesetzt wurde ein Acryllack mit folgender Zusammensetzung:

### Rezeptur

**Teil 1:**

| | | |
|---|---|---|
| i) | Viacryl VSC 6295w/45WA | 88,5 Gew.-% |
| ii) | Butylglykol | 3,8 Gew.-% |
| iii) | Ethyldiglykol | 2,0 Gew.-% |
| iv) | Entmineralisiertes Wasser | 4,0 Gew.-% |

**Teil 2:**

| | | |
|---|---|---|
| i) | Coatex BR 100 (Verdicker) | 0,4 Gew.-% |
| ii) | Surfynol DF 110 | 0,5 Gew.-% |
| iii) | BYK 348 | 0,2 Gew.-% |

**Teil 3:**

| | | |
|---|---|---|
| i) | BYK 347 | 0,2 Gew.-% |
| ii) | BYK 380 N | 0,4 Gew.-% |
| | | 100,0 Gew.-% |

### Herstellung:

Teil 1 wurde ca.10 Minuten am Dissolver bei ca. 1500 U/min gerührt. Anschließend wurden die Komponenten aus Teil 2 einzeln nacheinander zugeben und bei ca. 2000 U/min 10 Minuten dispergiert. Der 3. Teil wurde bei ca. 1000 U/min am Dissolver zugegeben. Zuletzt wurden die Wachse, Cellulosen oder Stärken (2 % und 4 %) mit 1500 U/min mit einer Rührzeit von 20 Minuten eingearbeitet.

Nach der Präparation wurde dieser Lack ebenfalls mit einer Rakel (60 µm) auf eine Glasoberfläche aufgetragen. Nach einer Trocknungszeit von 24 Stunden und einer anschließenden 24-stündigen Lagerung in einem Klimaraum konnte die Bestimmung der Kratzfestigkeit und des Gleitreibungskoeffizienten erfolgen.

## Patentansprüche

1. Lacksystem, enthaltend
a) chemisch nicht modifizierte Cellulose und
b) Polyolefin- und/oder Fischer-Tropsch-Wachse und/oder Amidwachse und/oder biobasierte Wachse und
c) Filmbildner und
d) optional Lösemittel oder Wasser und
e) optional Pigmente sowie
f) optional flüchtige und/oder nicht flüchtige Additive,
wobei die chemisch nicht modifizierte Cellulose eine mittlere Faserlänge zwischen 7 µm und 100 µm sowie ein mittleres Aspektverhältnis von kleiner 5 aufweist, und die Wachse in einer Menge, bezogen auf das Lacksystem, von 0,1 bis 12,0 Gew.-%, eingesetzt werden.

2. Lacksystem gemäß Anspruch 1, **dadurch gekennzeichnet, dass** die chemisch nicht modifizierte Cellulose in einer Menge, bezogen auf das Lacksystem, von 0,1 bis 12,0 Gew.-% eingesetzt wird.

3. Lacksystem gemäß Anspruch 1, **dadurch gekennzeichnet, dass** die Polyolefin- oder Fischer-Tropsch- oder Amidwachse oder biobasierten Wachse In mikronisierter Form mit einem D99-Wert von maximal 100 µm eingesetzt werden.

4. Lacksystem gemäß den Ansprüchen 1 - 3, **dadurch gekennzeichnet, dass** ein Filmbildner aus einer der Gruppen der Epoxidharze (1- oder 2-komponentlg), der Polyurethane (1- oder 2-komponentig), der Acrylatharze, der Cellulosederivate, insbesondere Cellulosenitrat und Celluloseester, oder der Gruppe der Alkydharze Verwendung findet.

5. Verfahren zur Verbesserung der Haptik und der Kratzfestigkeit sowie des Absetz- und Redispergierverhaltens von Lacksystemen, **dadurch gekennzeichnet, dass** diesen chemisch nicht modifizierte Cellulose, die eine durchschnittliche Faserlänge zwischen 7 µm und 100 µm sowie ein mittleres Aspektverhältnis von ≤ 5 besitzt, und Polyolefin- und/oder Fischer-Tropsch-Wachse und/oder Amidwachse und/oder biobasierte Wachse zugegeben werden, wobei die Wachse in einer Menge, bezogen auf das Lacksystem, von 0,1 bis 12,0 Gew.-% eingesetzt werden.

6. Verfahren gemäß Anspruch 5, **dadurch gekennzeichnet, dass** die chemisch nicht modifizierte Cellulose In einer Menge, bezogen auf das Lacksystem, von 0,1 bis 12,0 Gew.-% eingesetzt wird.

7. Verwendung gemäß den Ansprüchen 1 - 6, **dadurch gekennzeichnet dass** das erfindungsgemäße Lacksystem mit üblichen Additiven wie Vernetzungsmittel, Vernetzungsbeschleuniger, Verlaufshilfsmittel, Benetzungshilfsmittel, Entschäumer, Weichmacher, Pigmenten, UV-Stabilisatoren, Antioxidantien und anderen Hilfsmitteln eingesetzt wird.

## Claims

1. A paint system comprising
a) chemically unmodified cellulose and
b) polyolefin waxes and/or Fischer-Tropsch waxes and/or amide waxes and/or biobased waxes and
c) film formers and
d) optionally solvents or water and
e) optionally pigments, and also
f) optionally volatile and/or nonvolatile additives,
the chemically unmodified cellulose having an average fiber length between 7 µm and 100 µm and an average aspect ratio of less than 5, and the waxes are used in an amount, based on the paint system, of 0.1 to 12.0 wt%.

2. The paint system as claimed in claim 1, wherein the chemically unmodified cellulose is used in an amount, based on the paint system, of 0.1 to 12.0 wt%.

3. The paint system as claimed in claim 1, wherein the polyolefin waxes or Fischer-Tropsch waxes or amide waxes or biobased waxes are used in micronized form with a D99 of not more than 100 µm.

4. The paint system as claimed in claims 1-3, wherein a film former is used from one of the groups of the epoxy resins (1- or 2-component), the polyurethanes (1- or 2-component), the acrylate resins, the cellulose derivatives, more particularly cellulose nitrate and cellulose esters, or the group of the alkyd resins.

5. A method for improving the tactility and the scratch resistance and also the settling and redispersing behavior of paint systems, wherein said systems are admixed with chemically unmodified cellulose which possesses an average fiber length between 7 µm and 100 µm and also an average aspect ratio of ≤ 5, and with polyolefin waxes and/or Fischer-Tropsch waxes and/or amide waxes and/or biobased waxes, wherein the waxes are used in an amount, based on the paint system, of 0.1 to 12.0 wt%.

6. The method as claimed in claim 5, wherein the chemically unmodified cellulose is used in an amount, based on the paint system, of 0.1 to 12.0 wt%.

7. The use as claimed in claims 1-6, wherein the paint system of the invention is used with customary additives such as crosslinking agents, crosslinking accelerators, flow control assistants, wetting assistants, defoamers, plasticizers, pigments, UV stabilizers, antioxidants, and other auxiliaries.

## Revendications

1. Système de peinture contenant:
a) de la cellulose non modifiée chimiquement et
b) des cires de polyoléfine et/ou de Fischer-Tropsch et/ou des cires d'amide et/ou des cires biologiques et
c) un agent filmogène et
d) eventuellement un solvant ou de l'eau et
e) éventuellement des pigments, ainsi que
f) éventuellement des additifs volatils et/ou non volatils,
la cellulose non modifiée chimiquement présentant une longueur de fibres moyenne comprise entre 7 µm et 100 µm, ainsi qu'un rapport d'aspect moyen inferieur à 5, et les cires sont utilisées en une quantité, par rapport au système de peinture, de 0,1 à 12,0 % en poids.

2. Système de peinture selon la revendication 1, **caractérisé en ce que** la cellulose non modifiée chimiquement est utilisée en une quantité, par rapport au système de peinture, de 0,1 à 12,0 % en poids.

3. Système de peinture selon la revendication 1, **caractérisé en ce que** les cires de polyoléfine ou de Fischer-Tropsch ou d'amide ou les cires biologiques sont utilisées sous forme micronisée avec une valeur D99 d'au plus 100 µm.

4. Système de peinture selon les revendications 1 à 3, **caractérisé en ce qu'**un agent filmogène d'un des groupes des résines époxydes (mono- ou bicomposantes), des polyuréthanes (mono- ou bicomposants), des résines acrylates, des dérivés de cellulose, notamment le nitrate de cellulose et les esters de cellulose, ou du groupe des résines alkyde, est utilisé.

5. Procédé d'amélioration du toucher et de la résistance aux éraflures, ainsi que du comportement de dépôt et de redispersion de systèmes de peinture, **caractérisé en ce que** de la cellulose non modifiée chimiquement, qui présente une longueur de fibres moyenne comprise entre 7 µm et 100 µm, ainsi qu'un rapport d'aspect moyen ≤ 5, et des cires de polyoléfine et/ou de Fischer-Tropsch et/ou des cires d'amide et/ou des cires biologiques sont ajoutées à ceux-ci.

6. Procédé selon la revendication 5, **caractérisé en ce que** la cellulose non modifiée chimiquement est utilisée en une quantité, par rapport au système de peinture, de 0,1 à 12,0 % en poids.

7. Utilisation selon les revendications 1 à 6, **caractérisée en ce que** le système de laque selon l'invention est utilisé avec des additifs usuels tels que des agents de réticulation, des accélérateurs de réticulation, des adjuvants d'étalement, des adjuvants de mouillage, des agents antimousse, des plastifiants, des pigments, des stabilisateurs UV, des antioxydants et d'autres adjuvants.
